# EUROPEAN PATENT APPLICATION

(11) **EP 3 279 836 A1**
(43) Date of publication of application: **07.02.2018**
(21) Application number: 16305999.1
(22) Date of filing: 02.08.2016
(51) Int. Cl.: G06K 19/07

(54) **METHOD AND APPARATUS FOR MULTI-BAND ENERGY HARVESTING**

(71) Applicant: Thomson Licensing, 92130 Issy-les-Moulineaux (FR)
(72) Inventor: LOUZIR, Ali, 35576 Cesson Sévigné (FR); LE NAOUR, Jean-Yves, 35576 Cesson Sévigné (FR)
(74) Representative: Huchet, Anne

(57) **Abstract**

Apparatus (300, 400) and method (1700) for harvesting energy are provided. The apparatus includes an antenna (310, 410), a first rectifier (332, 432) coupled to the antenna that harvests energy in a first frequency band including a first frequency substantially equal to a multiple k of a particular frequency, for k ≥ 1, at least one second rectifier (334, 434, 436) coupled to the antenna that harvests energy in at least one second frequency band including a respective at least one second frequency substantially equal to a multiple k' of the particular frequency, for k' ≥ 2, and a combiner (338, 438) that combines the first and the at least one second rectifier outputs to provide an output signal (340, 440).. The apparatus (300, 400) and method (1700) may provide power to passive or semi-passive devices, e.g., a Radio Frequency Identification device. The apparatus may be included in the devices.

## Description

### TECHNICAL FIELD

The present disclosure relates to multi-band energy harvesting for passive or semi-passive devices, in particular, for radio frequency identification (RFID) devices.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Radio frequency identification (RFID) is a generic term for technologies that use radio waves to automatically identify people or objects. An RFID system uses tags, or labels attached to the objects to be identified. Two-way radio transmitter-receivers called interrogators or readers send a signal to the tag and read its response. There are several types of RFID tags, depending on range, size, cost and underlying technology.

RFID tags can be passive, active or battery-assisted (or semi) passive. An active tag has an on-board battery and periodically transmits its ID signal. A battery-assisted passive (BAP) tag has a small battery on board and is activated when in the presence of an RFID reader. A passive tag is cheaper and smaller because it has no battery; instead, the tag uses the radio energy transmitted by the reader as the power source. However, to operate a passive tag, it must be illuminated with a power level roughly a thousand times stronger than for signal transmission. That makes a difference in interference and in exposure to radiation. The energy conversion is performed by an RF energy harvester generally including an antenna and a rectifier/multiplier tuned to the waves received from the RFID reader.

Tags may either be read-only, having a factory-assigned serial number that is used as a key into a database, or may be read/write, where object-specific data can be written into the tag by the system user. Field programmable tags may be write-once, read-multiple; "blank" tags may be written with an electronic product code by the user.

RFID tags contain at least two parts: an integrated circuit (IC, microchip or chip) for storing and processing information, modulating and demodulating a radiofrequency (RF) signal, collecting DC power from the incident reader signal, and other specialized functions; and an antenna for receiving and transmitting the signal. The tag information is stored in a non-volatile memory. The RFID tag includes either fixed or programmable logic for processing the transmission and sensor data, respectively.

An RFID reader transmits an encoded radio signal to interrogate the tag. The RFID tag receives the message and then responds with its identification and/or other information. This may be only a unique tag serial number, or may be product-related information such as a stock number, lot or batch number, production date, or other specific information. Since tags have individual serial numbers, the RFID system design can discriminate among several tags that might be within the range of the RFID reader and read them simultaneously.

RFID systems may be classified in two major classes operating in different frequency bands. The difference between the two classes is based on the type of physical coupling between the reader and the tag, which could be either magnetic (inductive coupling) or electromagnetic (radiative coupling). Inductive or magnetic coupling (MC) occurs when a varying magnetic field exists between two parallel conductors typically less than a wavelength apart, inducing a change in voltage along the receiving conductor. It generally applies to frequencies up to the Very High Frequency (VHF) range, around 100 MHz. In RFID systems based on inductive coupling, the tag gets its energy from the proximity coupled magnetic field and responds by loading its own antenna with different impedances.

Radiative or electromagnetic coupling occurs when the source and the target (or victim) are separated by a large distance, typically more than a wavelength. The source and the target act as radio antennas: the source emits or radiates an electromagnetic wave which propagates across the space in between and is picked up or received by the target. Radiative coupling generally applies to frequencies above 100 MHz. In RFID systems based on radiative coupling, the tag gets its energy from the electromagnetic field radiated by the reader and reflects it back modulating with its own impedances presenting different Radar Cross Section (RCS). RCS is a measure of the ability of a target to reflect radar signals in the direction of the radar receiver.

The coupling nature of the first class (inductive coupling) limits the read range to an order of magnitude of the size of the reader or the tag antenna (generally few centimeters) while the range of the second class (radiative coupling) could reach up to tens of meters depending on the nature of tags (passive and active) and its sensitivity. For long range RFID systems operating in the Ultra High Frequency (UHF) band or microwave bands using passive tags, a part of the incoming RF signal (issued from the remote RFID reader and coupled through the tag antenna) is converted to DC for the supply of the chip. Once the chip is activated, the received signal is demodulated by the interface and reflected back (backscattered) modulated by the information stored in the chip memory. The chip activation is the limiting factor of the achievable range of RFID system using passive tags. Typical ranges of 10 m are currently achievable in Line of Sight (LOS) conditions with using state of the art passive tags and readers.

The Electronic Product Code (EPC™) Generation 2 (Gen2) air interface protocol defines the physical and logical requirements for an RFID system of interrogators and passive tags, operating in the 860 MHz - 960 MHz UHF (or also called 900 MHz) band. Over the past decade, EPC Gen2 has established itself as the standard for UHF implementations across multiple sectors, and is at the heart of more and more RFID implementations.

More recently with the explosion of wireless sensors, a new generation of RFID chips compliant with the EPC Gen2 standard has emerged with a power supply input to be connected to a coin-size battery, increasing the device range to several tens of meters. The new devices are not strictly passive, but may be considered semi-passive devices. However, battery life is not only inconvenient but may also be fatal to the commercial success of these new generation devices due to the complexity and cost of replacing batteries.

Therefore, there is a need to provide efficient techniques for improving the operation and range of passive or semi-passive RFID devices or other devices (e.g., remote control devices) by improving the energy harvesting capability of the devices. The present disclosure is directed towards such a technique.

### SUMMARY

According to an aspect of the present disclosure, an apparatus is provided, the apparatus including an antenna, a first rectifier coupled to the antenna that harvests energy in a first frequency band to generate a first rectified signal, the first frequency band including a first frequency substantially equal to a multiple k of a particular frequency, for k ≥ 1, at least one second rectifier coupled to the antenna that harvests energy in at least one second frequency band to generate at least one second rectified signal, the at least one second frequency band including a respective at least one second frequency substantially equal to a multiple k' of the particular frequency, for k' ≥ 2, and a combiner that combines the first rectified signal and the at least one second rectified signal to provide an output signal.

According to another aspect of the present disclosure, a method of harvesting energy is provided, the method including converting an electromagnetic field into an electric signal, rectifying the electric signal to harvest energy in a first frequency band and generate a first rectified signal, the first frequency band including a first frequency substantially equal to a multiple k of a particular frequency, for k ≥ 1, rectifying the electric signal to harvest energy in at least one second frequency band and generate at least one second rectified signal, the at least one second frequency band including a respective at least one second frequency substantially equal to a multiple k' of the particular frequency, for k' ≥ 2, combining the first rectified signal and the at least one second rectified signal into an output signal, and providing the output signal.

Additional features and advantages of the present disclosure will be made apparent from the following detailed description of illustrative embodiments which proceeds with reference to the accompanying figures.

### BRIEF DESCRIPTION OF THE DRAWINGS

The present disclosure may be better understood in accordance with the following exemplary figures briefly described below:
FIG. 1 illustrates a simplified block diagram of an exemplary RFID system in accordance with an embodiment of the present disclosure;
FIG. 2 illustrates a simplified block diagram of an exemplary RFID tag device in accordance with an embodiment of the present disclosure;
FIG. 3 illustrates a simplified block diagram of an exemplary multi-band RF harvester system in accordance with an embodiment of the present disclosure;
FIG. 4 illustrates a simplified block diagram of an exemplary multi-band RF harvester system in accordance with an embodiment of the present disclosure;
FIG. 5 illustrates an exemplary DC combiner based on serial coupling in accordance with an embodiment of the present disclosure;
FIG. 6 illustrates an exemplary DC combiner based on parallel coupling in accordance with an embodiment of the present disclosure;
FIG. 7 illustrates the current, voltage and magnetic field distributions along a half-wave dipole in accordance with an embodiment of the present disclosure;
FIG. 8 illustrates the current distribution along a half-wave dipole at a fundamental frequency and at two harmonic frequencies in accordance with an embodiment of the present disclosure;
FIG. 9 illustrates an exemplary arrangement for a multi-band RF harvester system in accordance with an embodiment of the present disclosure.
FIG. 10 illustrates an exemplary arrangement for a multi-band RF harvester system in accordance with an embodiment of the present disclosure.
FIG. 11 illustrates an exemplary arrangement for a multi-band RF harvester system in accordance with an embodiment of the present disclosure.
FIG. 12 illustrates an exemplary arrangement for a multi-band RF harvester system in accordance with an embodiment of the present disclosure.
FIG. 13 illustrates an exemplary arrangement for a multi-band RF harvester system in accordance with an embodiment of the present disclosure.
FIG. 14 illustrates an exemplary arrangement for a multi-band RF harvester system in accordance with an embodiment of the present disclosure.
FIG. 15 illustrates a simplified block diagram of an RFID tag device in accordance with an embodiment of the present disclosure;
FIG. 16 illustrates a simplified block diagram of an RFID tag device in in accordance with an embodiment of the present disclosure;
FIG. 17 illustrates a flowchart of an exemplary method in accordance to one embodiment of to the present disclosure.

### DETAILED DISCUSSION OF THE EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure is directed to efficient techniques for improving the operation and range of passive or semi-passive RFID devices or other devices (e.g., remote control devices) by improving the energy harvesting capability of the devices.

Recently with the explosion of wireless sensors, a new generation of RFID chips compliant with the EPC Gen2 standard that are also accessible via an I²C interface are being proposed by many RFID chip providers (e.g., the SL3S4011_4021 chip from NXP™, or the Monza X Chip from Impjin™). The I²C functionality enables writing/reading information in the chip memory of a passive RFID tag, such as sensor information that could be then accessed through a regular UHF access using standard UHF Gen2 protocol. The I²C functionality needs to be supplied externally; therefore these new generation chips present a power supply input to be connected to a coin-size battery. In addition, when supplied with battery power, the chip READ/WRITE sensitivity is significantly improved (typically from -18 dBm to - 23 dBm for the NXP™ SL3S4021 chip or from -17 dBm to -24 dBm for the Impinj™ Monza X chip) leading to increased READ range up to several tens of meters.

The present disclosure describes a novel, simple and cost effective RF energy harvester that may be utilized as an RFID tag power source solution. The RF energy harvester of the present disclosure may be included in an RFID device or may provide external power to an RFID device, being compliant with passive EPC Gen2 standard or other standards. The RF energy harvester of the present disclosure has the capability of energy harvesting of ambient RF signals from Wireless Fidelity (WiFi) transmitters, broadcast or cellular base stations operating at multiple frequency bands. Therefore, the harvested RF energy may be used to supply power to the new generation of RFID chips, improving the READ/WRITE performances, or to augment passive RFID tags with sensing capability without requiring the use of cumbersome, costly and limited lifetime battery. Similar improvements also apply to other passive or semi-passive devices, including remote control devices, which are not herein described in detail, and are known to one of ordinary skill in the pertinent art. In fact, similar energy harvesters may be used in RFID readers, to improve their performance and save battery power. Without loss of generality, the following discussion on RF energy harvesters will concentrate on RFID tag devices but equally applies to other passive or semi-passive devices.

Fundamentally, a passive RFID tag acts as an energy harvester. The RF energy harvesting is performed by an antenna and a rectifier/multiplier tuned to the waves received from the RFID reader. Indeed, a portion of the energy of the incoming RF signal, transmitted by the RFID reader, and coupled through the RFID tag antenna, is converted to DC by the rectifier/multiplier for the supply of the RFID chip and is thus not used for the wireless communication link. The idea of the present disclosure is to use a multiband RFID tag antenna which is able to harvest the energy at other frequency bands not necessarily coming from an RFID reader, including WiFi, broadcast and Long Term Evolution (LTE), to supply the RFID chip with that additional harvested energy. This energy is thus used either:
i. To boost the performance of the passive RFID tag, through the powering of its chip circuitry, as it is done for semi-passive (or semi-active) tags, or
ii. In the case of a RFID sensor, to supply the sensor connected to the passive RFID tag with the required energy, even when no reader is present

The present disclosure takes advantage of the fact that the frequency bands allowed for long range RFID systems (e.g., 433 MHz, 860-960MHz, etc.) and those used for WiFi (2.4 GHz or 5.2-5.8GHz GHz bands, etc.), or for ongoing or future generations of cellular service LTE bands (around 900 MHz, 1800 MHz, 2.5 GHz and 3.5 GHz), Global System for Mobile Communications (GSM) band (900 MHz, 1800 MHz) and in the TV broadcast band (470 MHz-860 MHz) are similar or almost multiples of each other.

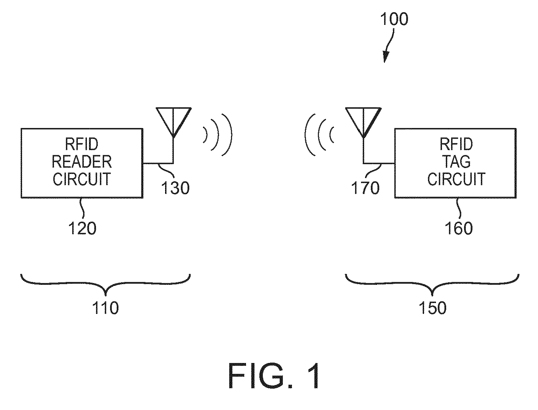

FIG. 1 illustrates a simplified block diagram of an exemplary RFID system 100 according to an aspect of the present disclosure. RFID system 100 includes RFID reader device 110 and RFID tag device 150. RFID reader device 110 includes RFID reader circuit 120 coupled to RFID reader antenna 130. RFID tag device 150 includes RFID tag circuit 160 coupled to RFID tag antenna 170. RFID reader 110 generates and modulates a request message in RFID reader circuit 120 to create a transmitter signal, and radiates the transmitter signal via electromagnetic waves through antenna 130. RFID tag antenna 170 is tuned to receive the waves radiated from RFID reader antenna 130. An antenna is a specialized transducer or converter that converts RF fields into Alternating Current (AC) or vice-versa. RFID tag antenna 170 converts electromagnetic fields of the received waves to an electrical signal. RFID tag 150 draws power from the electrical signal and uses it to power up RFID tag circuit 160. The electrical signal may fully power up the RFID tag circuit 160, in a passive RFID tag, or partially power up the RFID tag circuit 160, in the case of a semi-passive RFID tag. RFID tag circuit 160 also receives and demodulates the electrical signal to retrieve the request message. RFID tag circuit 160 then generates and modulates a response message with its identification number(s) and/or other information. The modulated response message is radiated via electromagnetic waves through RFID tag antenna 170.

One of the aspects of passive and semi-passive RFID tags is the method of re-modulating an RFID reader electromagnetic wave through backscattering. Because RFID tags are designed to generally have a reactive (e.g., capacitive) impedance, any incoming electromagnetic wave is actually reflected (re-radiated) by an antenna to its source. Thus, when RFID reader 110 transmits an electromagnetic wave to RFID tag 150, the wave is reflected by the RFID tag 150 back toward the RFID reader 110. Because of this characteristic, RFID tag 150 is able to encode a message by modulating the re-radiated electromagnetic wave. Actual modulation of this wave may occur as a transistor in RFID tag circuit 160 rapidly switches between two discrete impedance states. Because each impedance state has both a resistive and capacitive characteristic (real and imaginary impedance), the RFID tag 150 may actually perform both phase and amplitude modulation of the re-radiated signal.

RFID reader 110 receives the re-radiated waves through RFID reader antenna 130 and converts the waves to digital data containing the response message. It is to be understood that RFID reader circuit 120 may be any RFID reader circuit or IC well-known to one of ordinary skill in the pertinent art. Likewise, RFID reader antenna 130 and RFID tag antenna 170 may be any antenna well-known to one of ordinary skill in the pertinent art, e.g., dipole antennas, loop antennas, inverted-F antennas, monopole antennas, patch or microstrip antennas, etc.

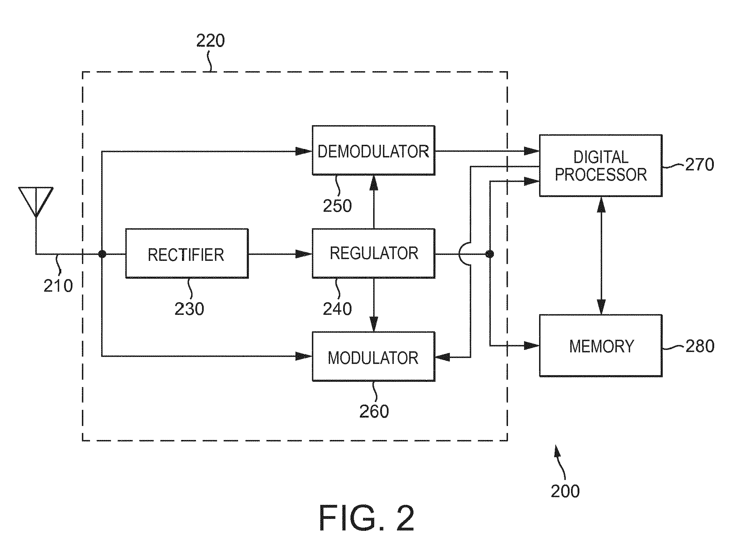

FIG. 2 illustrates a simplified block diagram of an exemplary RFID tag device 200 according to an aspect of the present disclosure. RFID tag 200 may be similar to RFID tag device 150. RFID tag device 200 includes antenna 210, similar to antenna 170. RFID tag device 200 also includes analog front end (AFE) 220, digital processor 270 and memory 280 which together are similar to RFID tag circuit 160. AFE 220 is coupled to antenna 210 and includes rectifier 230, regulator 240, demodulator 250 and modulator 260. Rectifier 230 performs the function of rectification/multiplication of the received electrical signal and provides Direct Current (DC) power to regulator 240. An RF energy harvester is built around an RF rectifier which is an electrical circuit that converts RF power from a lower voltage to a higher DC voltage using a network of capacitors and diodes. The antenna input is connected to a diode rectifier through a matching network and for given diode characteristics and fixed RF input power, the load is optimized for a maximum RF to DC converter efficiency. As an example, the HSMS-286 family of RF detector diodes from Avago™ is well suited for use in energy harvesting from 900 MHz up to 5.8 GHz frequency range.

Regulator 240 is coupled to rectifier 230 and regulates the input power to desired levels by the remaining components of RFID tag 200, which are coupled to regulator 240. Demodulator 250 is coupled to regulator 240 and to antenna 210 and receives and demodulates the input electrical signal to retrieve the request message and possibly control signals from the RFID reader (e.g., RFID reader 110). Modulator 260 is coupled to regulator 240 and to antenna 210, and modulates a response message including its identification number(s) and/or other information, and possibly control signals. The modulated response message is radiated via electromagnetic waves through RFID tag antenna 210. Digital processor 270 is coupled to regulator 240, demodulator 250 and modulator 260. Digital processor 270 receives and interprets a digital request message and control signals from demodulator 250 and requests identification number(s) and/or other information from memory 280. Memory 280 is coupled to digital processor 270 and stores identification number(s) and/or other information. Memory 280 may be a non-volatile memory, including a read-only memory (ROM) or a read-write memory. Memory 280 provides the necessary information to digital processor 270 upon request. Digital processor 270 may also include the operations of clock management, data encoding (e.g., error correction encoding), data decoding (e.g., error correction decoding), data encryption, data decryption, anti-collusion, etc. Digital processor 270 may include a digital logic circuit, including, e.g., finite state machine(s) (FSM) and registers. Digital processor 270 may include a controller that controls the operation of RFID tag 200. Digital processor 270 may also generate appropriate control signals and send the response message including identification number(s) and/or other information and possibly control signals to modulator 260. It is to be understood that the various components of RFID tag 200 may be well-known circuits by a person of ordinary skill in the art and will not be described in detail. It is to be understood that other well-known components may be present in RFID tag 200, e.g., a frequency oscillator. It is to be understood that RFID tag 200 and corresponding RFID reader (e.g., RFID reader 110) may be compliant with at least one RFID standard, e.g., the EPC Gen2, the International Standards Organization ISO 18000 series standards, etc.

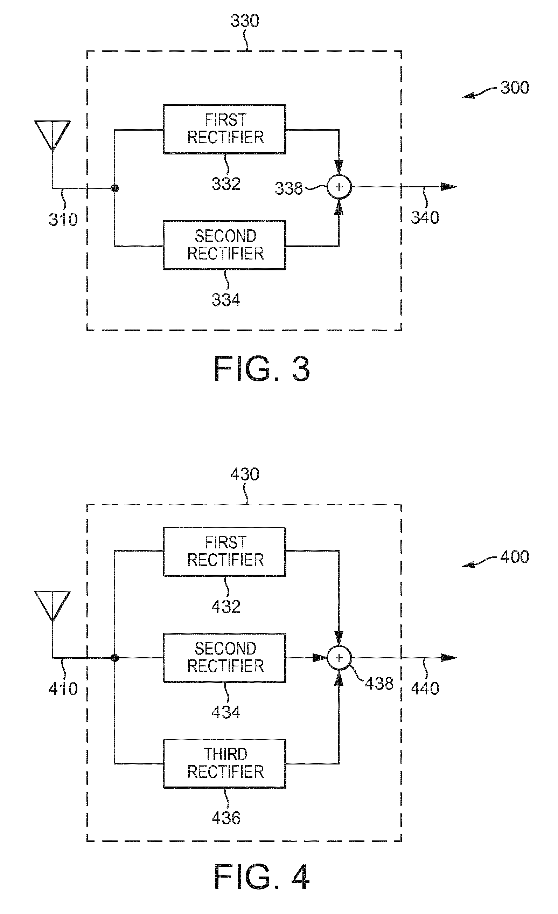

According to the present disclosure, more than one rectifier/multiplier circuits or RF harvester may be included in RFID tag device 200, the plurality of rectifiers/multipliers harvesting energy from a plurality of frequency bands. The plurality of frequency bands may include a fundamental frequency and approximate harmonics of the fundamental frequency, that is, frequencies that are approximately or substantially equal to a multiple of the fundamental frequency. In one embodiment of the present disclosure, being approximately or substantially equal means a frequency value fₐₚₚᵣₒₓ within a ±10% deviation or margin from the exact frequency value f (i.e., 0.9*f ≤ fₐₚₚᵣₒₓ ≤ 1.1*f). In one embodiment, approximately or substantially equal means a frequency value within a ±20% deviation or margin from the exact frequency value. Therefore, when harvesting energy from a plurality of frequency bands, the various rectifier/multiplier circuits in FIGs 3 or 4 may be placed at particular positions with respect to the antenna (e.g., antenna 170 or 210), where the positions are related to the size (and corresponding fundamental frequency of resonance) of the antenna and the frequency band of operation of the rectifier.

FIG. 3 illustrates a simplified block diagram of an exemplary multi-band RF harvester system 300 in accordance with an embodiment of the present disclosure. Multi-band RF harvester system 300 includes multi-band rectifier system 330 similar to rectifier 230 and coupled to antenna 310 similar to antennas 210 and 170. Coupling to the antenna may be performed by magnetic or electrical means. Multi-band RF harvester system 300 may function as an RF energy harvester for a passive or semi-passive device, e.g., an RFID tag device. Multi-band RF harvester system 300 may be included in an RFID tag device, e.g., device 200. Antenna 310 may replace antenna 210 or 170 in RFID tag device 200. Multi-band rectifier system 330 may replace rectifier 230 in RFID tag device 200. Multi-band rectifier system 330 includes two rectifiers/multiplier circuits: a first rectifier 332, a second rectifier 334 coupled at their respective inputs. Multi-band rectifier system 330 also includes a DC combiner 338 coupled to first rectifier 332 and to second rectifier 334 that combines and delivers the power from both rectifiers 332 and 334 at the output of system 300. The combined power 340 out of system 300 may be used to feed regulator 240 in RFID tag device 200.

FIG. 4 illustrates a simplified block diagram of an exemplary multi-band RF harvester system 400 in accordance with an embodiment of the present disclosure. Multi-band RF harvester system 400 includes multi-band rectifier system 430 similar to rectifier 230 and coupled to antenna 410 similar to antennas 210 and 170. Coupling to the antenna may be performed by magnetic or electrical means. Multi-band RF harvester system 400 may function as an RF energy harvester for a passive or semi-passive device, e.g., an RFID tag device. Multi-band RF harvester system 400 may be included in an RFID tag device, e.g., device 200. Antenna 410 may replace antenna 210 or 170 in RFID tag device 200. Multi-band rectifier system 430 may replace rectifier 230 in RFID tag device 200. Multi-band rectifier system 430 includes three rectifiers/multiplier circuits: a first rectifier 432 and a second rectifier 434 and a third rectifier 436, all three rectifiers coupled at their respective inputs. The multi-band rectifier system 430 also includes a DC combiner 438 coupled to first rectifier 432, to second rectifier 434 and to third rectifier 436 that combines and delivers the power from both rectifiers 432, 434 and 436 at the output of system 400. The combined power 440 out of system 400 may be used to feed regulator 240 in RFID tag device 200.

It is to be understood that the various components of RF energy harvester system 300 and 400 may be well-known circuits by a person of ordinary skill in the art and will not be described in detail.

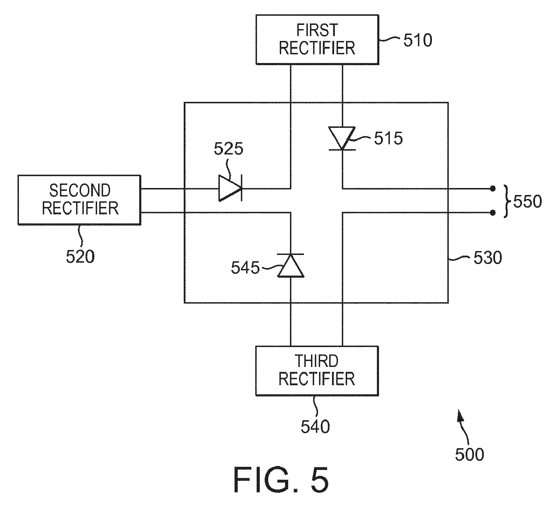

In FIGs 3 and 4, the combination of DC voltages from each energy harvester or rectifier performed by DC combiner 338 or 438 may be done either by serial or parallel coupling. FIG. 5 illustrates an exemplary DC combiner 530 based on serial coupling in accordance with an embodiment of the present disclosure. DC combiner 530 is similar to DC combiner 438 and also applicable to DC combiner 338, if third rectifier 540 is removed. The serial coupling allows the algebraic summation 550 of the power available from each energy harvester (510, 520 and 530). Blocking diodes (515, 525 and 545) are used to avoid the power reflow in the harvesters 510, 520 and 530, respectively.

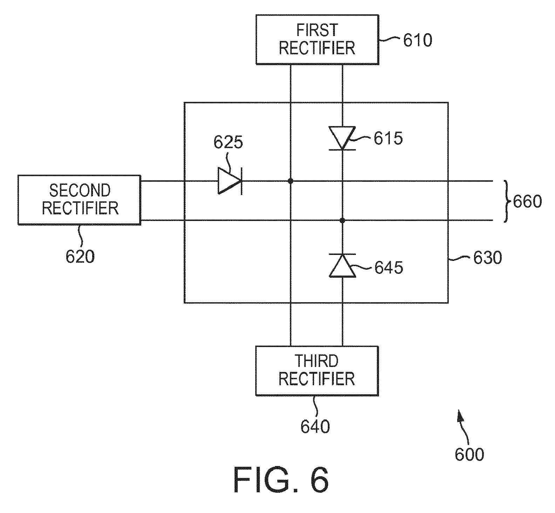

FIG. 6 illustrates an exemplary DC combiner based on parallel coupling in accordance with an embodiment of the present disclosure. The parallel DC combiner is more complex than the serial DC combiner. DC combiner 630 is similar to DC combiner 438 and also applicable to DC combiner 338, if third rectifier 640 is removed. The parallel coupling allows the algebraic summation 650 of the power available from each energy harvester (610, 620 and 630). Blocking diodes (615, 625 and 645) are used to avoid the power reflow in the harvesters 610, 620 and 630, respectively. The parallel DC combiner may be particularly interesting when the DC outputs from each harvester are approximately equal (for example, coming from the same RF transmitter), in case the minimum required current for the RFID tag may not be achieved with only one energy harvester.

In an exemplary embodiment of the present disclosure, antenna 170 and 210 may be a resonant half-wave dipole antenna of length L and wavelength of the resonant fundamental frequency λ, where L = λ/2. For the resonant half-wave dipole antenna, the coupling between each rectifier and the antenna may be performed by a coupling loop (or wire-loop antenna), that is, a form of magnetic or inductive coupling, in order to couple the energy from the dipole while minimizing interference with its operation as an antenna. The various rectifier/multiplier circuits in FIGs. 3 or 4 may be arranged along the direction of the resonant half-wave dipole length such that their coupling loops are each placed around a short circuit plane (i.e., a plane of a maximum of current) of the resonant mode of the half-wave dipole. For the resonant half-wave dipole antenna, a rectifier operating at a frequency band including a frequency that is approximately or substantially equal to a multiple k of the fundamental frequency may be placed at a position or distance approximately or substantially equal to (2*n+1)*L/(2*k) from an end of the dipole antenna, for n ∈ [0...k-1] and a dipole of length L. In one embodiment, approximately or substantially equal means within ±10% of the actual distance (2*n+1)*L/(2*k). In one embodiment, approximately or substantially equal means within ±20% of the actual distance (2*n+1)*L/(2*k).

In one embodiment, the first operating frequency band of the RFID tag device 150 or 200 may include a first operating frequency f and corresponding wavelength λ such that the dipole length L = λ/2. Frequency f is the fundamental frequency of the half-wave dipole antenna and multiples k of f, for k ≥ 2 are the harmonic frequencies (first (k=2), second (k=3), third (k=4), etc.) The operating frequency band of the RFID tag device corresponds to the frequency band of reception of a request message and transmission of a response message.

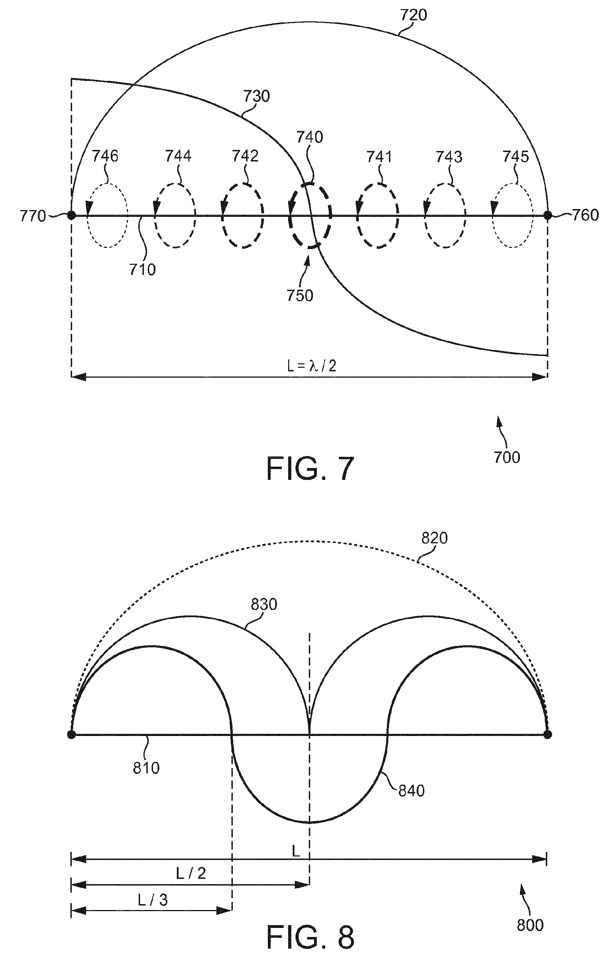

FIG. 7 illustrates the current 720, voltage 730 and magnetic field 740-746 distributions along a half-wave dipole antenna 710 of length L and wavelength λ₁ in accordance with an embodiment of the present disclosure. The magnetic field is maximum at the middle of the dipole (λ₁/4) 750 and minimum at the edges 760 and 770. The magnetic field is shown by a dashed line the thickness of which depends on the magnitude of the magnetic field. Therefore, for the fundamental mode of the half-wave dipole, the optimum magnetic coupling to the coupling loop of a rectifier is obtained at the center of the dipole. So a rectifier operating at the frequency f₁ shall be arranged at the middle of the half-wave dipole 750. The optimum coupling may be adjusted by adjusting the relative distance between the coupling loop of the rectifier and the half-wave dipole antenna and/or by slightly moving the coupling loop around the center of the half-wave dipole.

In addition, the present disclosure takes advantage of the fact that the frequency bands allowed for long range RFID systems are almost multiple of each other. That is, a half wave dipole antenna of length L' = λ'/2 ≈ λ₁/2 at a frequency f₁ = 433 MHz (resp. f₃ = 2.4 GHz) has substantially a length of λ₂ at a frequency f₂ = 900 MHz (resp. f₄ = 5 GHz). Likewise, a half wave dipole antenna of length L" = λ₂/2 at frequency f₂ = 900 MHz has a length of approximately 3*λ₃/2 at the frequency of f₃ = 2.4 GHz.

FIG. 8 illustrates the current distribution along a half-wave dipole 810 of length L at the fundamental mode (fundamental frequency f₁) 820 and at the two first harmonic modes at frequencies f₂=2*f₁ 830 and f₁=3*f₁ 840 in accordance with an embodiment of the present disclosure.

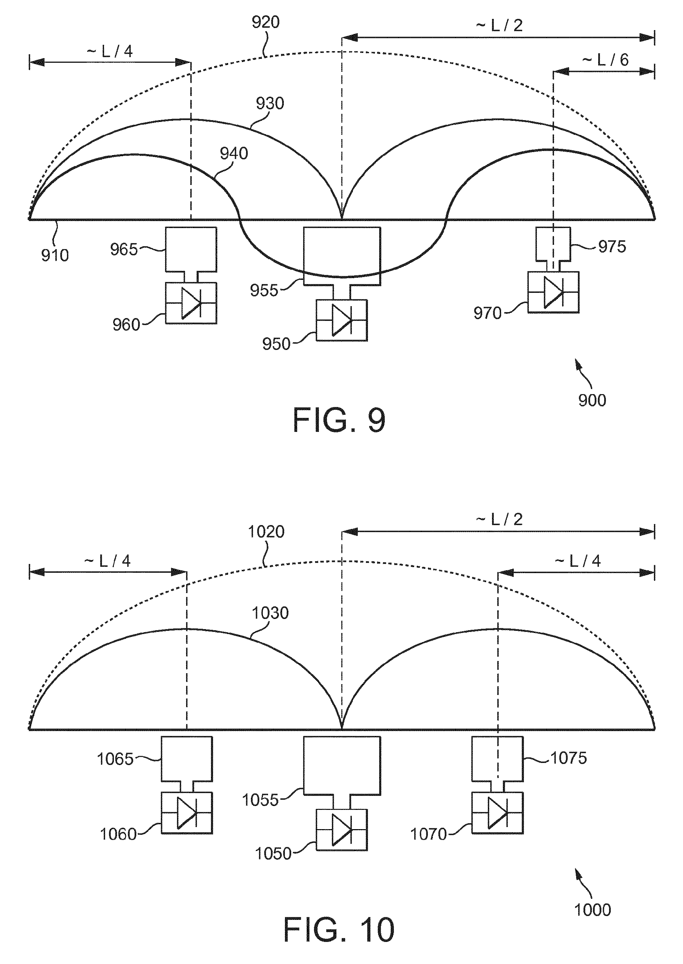

FIG. 9 illustrates an exemplary arrangement for a multi-band RF harvester system 900 similar to system 400 in accordance with an embodiment of the present disclosure. The RF energy harvester system 900 operates at multiple frequency bands corresponding to well-known wireless bands such as WiFi, Cellular or TV broadcast. The energy harvesting modules 950, 960 and 970 may be magnetically coupled to the resonant dipole-type antenna 910 at approximately the fundamental (950) and harmonic modes (first harmonic 960 and second harmonic 970), through a properly sized coupling or wire loop (resp. 955, 965, 975) placed around a short circuit plane (i.e. a plane of a maximum of current) at the corresponding approximate resonant frequency mode. The DC outputs of the energy harvesters constituted by the different RF rectifiers/multipliers, each optimized at its operating frequency, are combined together in a DC combiner (not shown, e.g., 438) that feeds a regulator block, e.g., regulator 240.

In one embodiment, rectifier 950 may operate in the 900 MHz band, rectifier 960 may operate in the 1.8 GHz band and rectifier 970 may operate in the 2.4 GHz band.

In one embodiment, the operating frequency band of the RFID tag (e.g., RFID tag 200 or 150) may be the fundamental frequency in the 900 MHz band. For example, the fundamental mode of the dipole-type antenna may cover the 900 MHz UHF RFID band. The approximate first and second harmonics may be used for energy harvesting, respectively in the 1800 MHz LTE-band and the 2.4 GHz WiFi band.

In one embodiment, the operating frequency band of the RFID tag (e.g., RFID tag 200 or 150) may be 2.4 GHz band. For example, a dipole-type antenna operating in the 900 MHz for its fundamental mode, is used for energy harvesting of both the GSM 900 MHz (at the approximate fundamental mode) and 1800 MHz LTE-band (at the approximate first harmonic) while the RFID is operating in the 2.4 GHz (at the approximate second harmonic).

FIG. 10 illustrates an exemplary arrangement for a multi-band RF harvester system 1000 similar to system 400 in accordance with an embodiment of the present disclosure. The RF energy harvester system 1000 operates at multiple frequency bands corresponding to well-known wireless bands such as WiFi, Cellular or TV broadcast. The energy harvesting modules 1050, 1060 and 1070 may be magnetically coupled to the resonant dipole-type antenna 1010 at approximately the fundamental (1050) and first harmonic mode (1060 and 1070), through a properly sized coupling or wire loop (resp. 1055, 1065, 1075) placed around a short circuit plane (i.e. a plane of a maximum of current) at the corresponding approximate resonant frequency mode. The DC outputs of the energy harvesters constituted by the different RF rectifiers/multipliers, each optimized at its operating frequency, are combined together in a DC combiner (e.g., 438) that feeds a regulator block, e.g., regulator 240.

In one embodiment, rectifier 1050 may operate in the 433 MHz band, and rectifiers 1060 and 1070 may operate in the 900 MHz band. In one embodiment, the operating frequency band of the RFID tag (e.g., RFID tag 200 or 150) may be the approximate fundamental frequency in the 433 MHz band. For example, the fundamental mode of the dipole antenna covers the 433 MHz RFID band and the approximate first harmonic is used for energy harvesting in the GSM 900 MHz band. In one embodiment, the operating frequency band of the RFID tag (e.g., RFID tag 200 or 150) may be in the 900 MHz band.

In one embodiment, rectifier 1050 may operate in the 900 MHz band, and rectifiers 1060 and 1070 may operate in the 1.8 GHz band. In one embodiment, the operating frequency band of the RFID tag (e.g., RFID tag 200 or 150) may be the approximate fundamental frequency in the 900 MHz band. For example, 2 energy harvesters may operate in the 1800 MHz LTE-band (at the approximate first harmonic) while the RFID is operating in the 900 MHz RFID band (at the approximate fundamental mode of the dipole). It is to be understood that the operating frequency band of the RFID tag (e.g., RFID tag 200 or 150) may also be in the 1.8 GHz band, even though current standards are not in this frequency band.

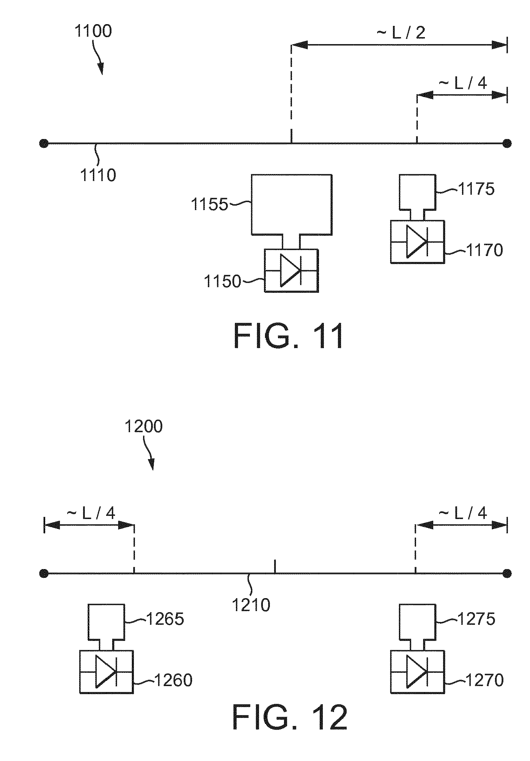

FIG. 11 illustrates an exemplary arrangement for a multi-band RF harvester system 1100 similar to system 300 in accordance with an embodiment of the present disclosure. The RF energy harvester system 1100 operates at multiple frequency bands corresponding to well-known wireless bands such as WiFi, Cellular or TV broadcast. The energy harvesting modules 1150 and 1170 may be magnetically coupled to the resonant dipole-type antenna 1110 at approximately the fundamental (1150) and first harmonic mode (1170), through a properly sized coupling or wire loop (resp. 1155, 1175). The DC outputs of the energy harvesters constituted by the different RF rectifiers/multipliers, each optimized at its operating frequency, are combined together in a DC combiner (e.g., 338) that feeds a regulator block, e.g., regulator 240.

In one embodiment, rectifier 1150 may operate in the 433 MHz band and rectifier 1170 may operate in the 900 MHz band. In one embodiment, the operating frequency band of the RFID tag (e.g., RFID tag 200 or 150) may be the approximate fundamental frequency in the 433 MHz band. In one embodiment, the operating frequency band of the RFID tag (e.g., RFID tag 200 or 150) may be in the 900 MHz band. For example, the approximate fundamental mode of the dipole may be used for energy harvesting in the TV broadcast band (typically in the lower edge of the UHF broadcast band, at approximately 470 MHz) and the approximate first harmonic is used for RFID in the 900 MHz band.

In one embodiment, rectifier 1150 may operate in the 2.4 GHz band and rectifier 1170 may operate in the 5 GHz band. In one embodiment, the operating frequency band of the RFID tag (e.g., RFID tag 200 or 150) may be the approximate fundamental frequency in the 2.4 GHz band. For example, the fundamental mode covers the 2.4 GHz RFID band and the approximate first harmonic is used for energy harvesting in the 5 GHz WiFi band. In one embodiment, the operating frequency band of the RFID tag (e.g., RFID tag 200 or 150) may be in the 5 GHz band. For example, the approximate fundamental mode is used to harvest energy in the 2.4 GHz WiFi band and the approximate first harmonic covers the 5 GHz RFID band.

FIG. 12 illustrates an exemplary arrangement for a multi-band RF harvester system 1200 similar to system 300 in accordance with an embodiment of the present disclosure. The RF energy harvester system 1200 operates at multiple frequency bands corresponding to well-known wireless bands such as WiFi, Cellular or TV broadcast. The energy harvesting modules 1260 and 1270 may be magnetically coupled to the resonant dipole-type antenna 1210 at the approximate first harmonic mode, through a properly sized coupling or wire loop (resp. 1265, 1275). The DC outputs of the energy harvesters constituted by the different RF rectifiers/multipliers, each optimized at its operating frequency, are combined together in a DC combiner (e.g., 338) that feeds a regulator block, e.g., regulator 240.

In one embodiment, rectifiers 1260 and 1270 may operate in the 2.4 GHz band. In one embodiment, the operating frequency band of the RFID tag (e.g., RFID tag 200 or 150) may be the 2.4 GHz band. The approximate fundamental frequency of the resonator is at 1.2 GHz band. This arrangement permits optimum coupling of both harvesters to the dipole antenna resonator. For example, energy harvesting may be performed at the 2.4 GHz WiFi band.

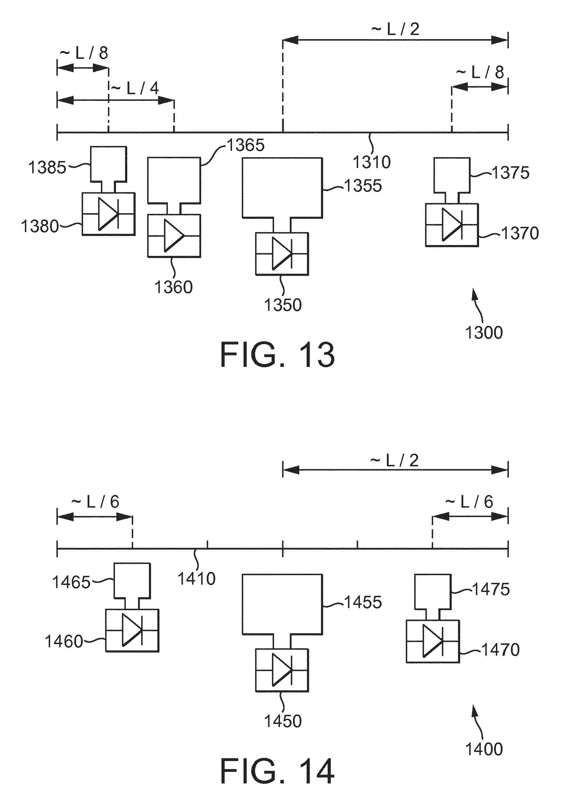

In one embodiment, the RFID tag (e.g., RFID tag 200 or 150) may operate in more than one frequency band and still perform energy harvesting in additional frequency bands. FIG. 13 illustrates an exemplary arrangement for a multi-band RF harvester system 1300 in accordance with an embodiment of the present disclosure. There are 4 rectifiers in system 1300. The RF energy harvester system 1300 operates at multiple frequency bands corresponding to well-known wireless bands such as WiFi, Cellular or TV broadcast. The energy harvesting modules 1350, 1360, 1370 and 1380 may be magnetically coupled to the resonant dipole-type antenna 1310 at approximately the fundamental (1350) and harmonic modes (first harmonic 1360, and third harmonic 370, 1380), through a properly sized coupling or wire loop (resp. 1355, 1365, 1375, 1385) placed around a short circuit plane (i.e. a plane of a maximum of current) at the corresponding resonant frequency mode. The DC outputs of the energy harvesters constituted by the different RF rectifiers/multipliers, each optimized at its operating frequency, are combined together in a DC combiner (not shown) that feeds a regulator block, e.g., regulator 240.

In one embodiment, rectifier 1350 may operate in the 433 MHz band, rectifier 1360 may operate in the 900 MHz band, and rectifiers 1370 and 1380 may operate in the 1.8 GHz band. In one embodiment, the operating frequency bands of the RFID tag (e.g., RFID tag 200 or 150) may be the approximate fundamental frequency in the 433 MHz band and the approximate first harmonic in the 900 MHz band. For example, the energy harvesting may be performed at the 1.8 GHz LTE band (second harmonic).

FIG. 14 illustrates an exemplary arrangement for a multi-band RF harvester system 1400 similar to system 400 in accordance with an embodiment of the present disclosure. The RF energy harvester system 1400 operates at multiple frequency bands corresponding to well-known wireless bands such as WiFi, Cellular or TV broadcast. The energy harvesting modules 1450, 1460 and 1470 may be magnetically coupled to the resonant dipole-type antenna 1410 at approximately the fundamental (1450) and second harmonic mode (1460 and 1470), through a properly sized coupling or wire loop (resp. 1455, 1465, 1475) placed around a short circuit plane (i.e. a plane of a maximum of current) at the corresponding approximate resonant frequency mode. The DC outputs of the energy harvesters constituted by the different RF rectifiers/multipliers, each optimized at its operating frequency, are combined together in a DC combiner (e.g., 438) that feeds a regulator block, e.g., regulator 240.

In one embodiment, rectifier 1450 may operate in the 900 MHz band, and rectifiers 1460 and 1470 may operate in the 2.4 GHz band. In one embodiment, the operating frequency band of the RFID tag (e.g., RFID tag 200 or 150) may be the approximate fundamental frequency in the 900 MHz band. For example, the energy harvesting may be performed at the 2.4 GHz WiFi band.

It is to be understood that the examples described in FIGs 10-14 are not exhaustive and other arrangements may be chosen without departing from the scope of the present disclosure. It is to be understood that a similar analysis may be performed for other types of antenna (e.g., loop antenna, inverted-F antenna, patch or microstrip antenna, etc.) with the results being a function of the geometry and properties of the antenna, which are well-known to a person of ordinary skill in the pertinent art and not described herein.

As previously mentioned multi-band rectifier systems 330 or 430 may be coupled to an antenna similar to antennas 210 and 170 to function as an RF energy harvester for a passive or semi-passive device, e.g., an RFID tag device. Multi-band rectifier systems 330 or 430 may replace rectifier 230, being included in RFID tag device 200.

In one embodiment of the present disclosure, the RFID tag device (e.g., device 200 or 150) may include an RFID tag Integrated Circuit (IC), as it is common in the pertinent industry. In one embodiment, the RFID tag IC may be coupled to an antenna (e.g., 210 or 170) and include a demodulator (e.g., 250), a regulator (e.g., 240), a modulator (e.g., 260), a digital processor (e.g., 270) and a memory (e.g., 280). The RFID tag IC may further include a first rectifier (e.g., 332 or 432) and a DC combiner (e.g., 338 or 438). The RFIC tag IC may further include an input coupled to the DC combiner for an external power source. For example, RFID tag devices compatible with the EPC Gen2 standard have provisions for such external power source.

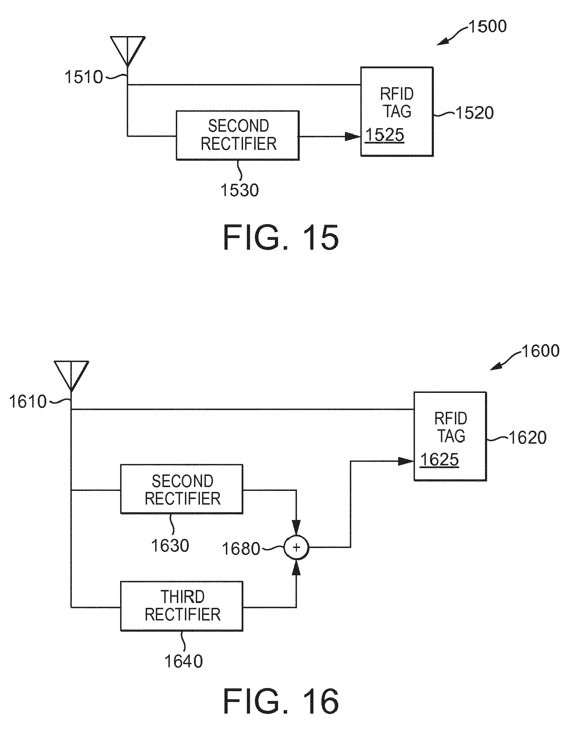

FIG. 15 illustrates a simplified block diagram of an RFID tag device 1500 in accordance with an embodiment of the present disclosure. RFID tag device 1500 is based on multi-band RF harvester 300. RFID tag device 1500 includes antenna 1510 similar to antenna 210, 310 or 150 and RFID tag IC 1520 coupled to antenna 1510. RFID tag IC is as described in the above paragraph. In addition, RFID tag device 1500 includes second rectifier 1530 similar to second rectifier 334 and coupled to antenna 1510. The external power source input 1525 of RFID tag IC 1520 is coupled to second rectifier 1530, which may supplement a first rectifier (e.g., rectifier 332) inside RFID tag IC 1520 in powering up the IC.

As previously mentioned, antenna 1510 may be a half-wave dipole. Each submodule (RFID tag IC 1520 or energy harvester 1530) may be magnetically coupled to the multi-band resonating dipole, using a small wire-type loop properly placed along the dipole length and is individually optimized at its own working frequency. The small coupling loop in a plane equivalent to a short-circuit plane at the desired working frequency of the IC or energy harvester. The size of the loop and its distance from the dipole are optimized so that the equivalent impedance of the antenna seen at the input of the IC 1520 or energy harvester 1530 is equal to the conjugate of the IC or energy harvester impedance.

As an example, for the coupling loop to the IC, the real and imaginary parts of the antenna input impedance Zᵢ, may be given by: Zᵢ = Rᵢ + jXᵢ = Zₗₒₒₚ + (ωM)²/Zᵣ, where:
- ω = 2πf and f is the resonant frequency;
- Zₗₒₒₚ is the impedance of the coupling loop which is mainly inductive and equal to the loop inductance at the resonant frequency;
- Zᵣ is the dipole radiation resistance. Zᵣ is real at the resonant frequency;
- M is the mutual inductance between the radiating body of the antenna and the feed loop. Basically, the mutual coupling M is used to adjust the real part of the antenna input, while the imaginary part is adjusted by the length of the coupling loop.

In one embodiment, variants on the shape (non-straight-line) of the dipole multi resonant antennas and variants of the shape of the coupling loops may be utilized.

FIG. 16 illustrates a simplified block diagram of an RFID tag device 1600 in accordance with an embodiment of the present disclosure. RFID tag device 1600 is based on multi-band in accordance with an embodiment of the present disclosure. RFID tag device 1500 is based on multi-band RF harvester 400. RFID tag device 1600 includes antenna 1610 similar to antenna 210, 410 or 150 and RFID tag IC 1620 coupled to antenna 1610. RFID tag IC 1620 is as previously described and is similar to RFID tag IC 1520. In addition, RFID tag device 1600 includes second rectifier 1630 similar to second rectifier 434 and third rectifier 1640 similar to third rectifier 436, each coupled to antenna 1610. RFID tag device 1600 also includes DC combiner 1680 similar to DC combiner 438 and coupled to second rectifier 1630 and third rectifier 1640. The external power source input 1625 of RFID tag IC 1620 is coupled to DC combiner 1680, which may supplement a first rectifier (e.g., 432) inside RFID tag IC 1620 in powering up the IC. It is to be understood that FIG. 16 may be extended to include additional rectifiers (e.g., a fourth rectifier) coupled to antenna 1620 and DC combiner 1680 without departing from the scope of the present disclosure.

It is to be understood that components 1610, 1630, 1640 and 1680 are also similar to the components of RF energy harvester 300. It is to be understood that RF energy harvester 300 or 400 may be coupled to input 1625 or 1525 and provide power to RFID tag IC 1620 or 1520, respectively.

According to the present disclosure, a compact and cost effective solution for an RF multi-band energy harvester has been described for improving range and/or functionality (e.g. sensing capability) of passive or semi-passive devices, e.g., an RFID tag device, a remote control device, etc. The RF energy harvester of the present disclosure includes the following features amd advantages:
- Independent optimization of each energy harvester at its own frequency;
- Possibility of combining energy coming from different RF transmitters;
- The solution may utilize commercial off the shelf (COTS) components, e.g., Schottky diodes;
- The solution may provide power to COTS devices, e.g., RFID tags, or be included in the devices.
- The additional space on the device may be almost negligible and the additional cost is modest (equal to the cost of the energy harvesters and DC combiner components).

According to one aspect of the present disclosure, an apparatus for harvesting energy 300, 400 is provided including an antenna 310, 410, a first rectifier 332, 432 coupled to the antenna that harvests energy in a first frequency band to generate a first rectified signal, the first frequency band including a first frequency substantially equal to a multiple k of a particular frequency, for k ≥ 1, at least one second rectifier 334, 434, 436 coupled to the antenna that harvests energy in at least one second frequency band to generate at least one second rectified signal, the at least one second frequency band including a respective at least one second frequency substantially equal to a multiple k' of the particular frequency, for k' ≥ 2, and a combiner 338, 438, 500, 600 that combines the first rectified signal and the at least one second rectified signal to provide an output signal 340, 440, 550, 660. The antenna 310, 410 is capable of receiving signals in the first frequency band and the at least one second frequency band.

In one embodiment of the apparatus, the output signal 340, 440 may be used to provide power to a device, the device being one of a passive and a semi-passive device, e.g., RFID tag device 200, 150, a passive or semi-passive remote control, RFID reader device 110, etc.

In one embodiment, the apparatus may be included in a device, the device being one of one of a passive and a semi-passive device e.g., RFID tag device 200, 150, a passive or semi-passive remote control, RFID reader device 110, etc.

In one embodiment of the apparatus, the output signal 340, 440 may be used to power up components of an RFID device 200, 150, 110 operating in at least one of the first frequency band and the at least one second frequency band.

In one embodiment, the apparatus may be included in an RFID device 200, 150, 110 operating in at least one of the first frequency band and the at least one second frequency band. That is, the apparatus is a component of an RFID device 200, 150, 110.

In one embodiment of the apparatus, the combiner 338, 438, 500, 600 may be included in an RFID IC 1520, 1620, the RFID IC included in the apparatus 300, 400 and coupled to the antenna 310, 410, 210, 170. The RFID IC may be an RFID tag IC or reader IC.

In one embodiment of the apparatus, one of the first rectifier 332, 432 and the at least one second rectifier 334, 434, 436 may be included in an RFID IC 1520, 1620, the RFID IC included in the apparatus 300, 400 and coupled to the antenna 310, 410, 210, 170.

In one embodiment of the apparatus, the apparatus 300, 400 may be included in an RFID IC 1520, 1620.

In one embodiment of the apparatus, the output signal 340, 440 may be used to provide power to an RFID IC 1520, 1620.

In one embodiment of the apparatus, the RFID IC 1520, 1620 may be compliant with the Electronic Product Code Generation 2 (EPC Gen2) standard.

In one embodiment, the apparatus may further include a second combiner 338, 438, 500, 600 when there are at least two second rectifiers 434, 436, the second combiner to combine the output signals of the rectifiers 434, 436 not included in the RFID IC 1520, 1620 before coupling to the first combiner 338, 438, 500, 600 inside the RFID IC.

In one embodiment of the apparatus, at least one rectifier 332, 432 may be magnetically coupled 955, 965, 975 to the antenna.

In one embodiment of the apparatus, the particular frequency may be a fundamental frequency of resonance for the antenna.

In one embodiment of the apparatus, the antenna may be a dipole antenna 910 and the rectifiers 950, 960, 970 are placed in positions in the vicinity of the dipole antenna and along a direction of a length of the dipole antenna, each position according to the frequency band of each respective rectifier.

In one embodiment of the apparatus, a rectifier operating at a frequency band including a frequency that is approximately or substantially equal to a multiple k of the particular frequency may be placed at a position or distance approximately or substantially equal to (2*n+1)*L/(2*k) from an end of the dipole antenna, for n ∈ [0...k-1] and a dipole of length L. In one embodiment, approximately or substantially equal means within ±10% of the actual distance (2*n+1)*L/(2*k). In one embodiment, approximately or substantially equal means within ±20% of the actual distance (2*n+1)*L/(2*k).

In one embodiment of the apparatus, the frequency bands may be in the ultra-high frequency (UHF) band.

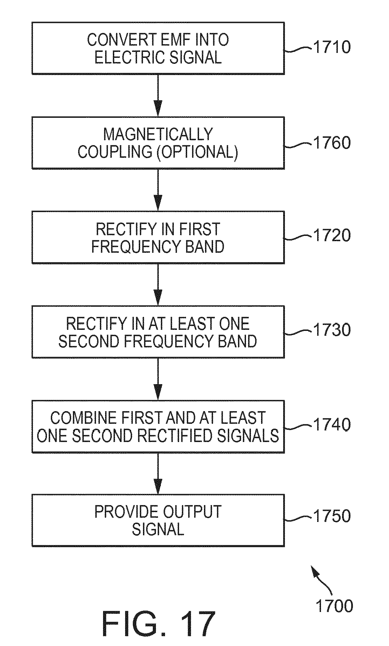

FIG. 17 illustrates a flowchart of an exemplary method of harvesting energy in accordance with the present disclosure. The method may include, at step 1710, converting an electromagnetic field into an electric signal. The step 1710 may be performed by, for example, antenna 310, 410, 170 or 210.

Next, at step 1720, the method may include rectifying the electric signal to harvest energy in a first frequency band and generate a first rectified signal, the first frequency band including a first frequency substantially equal to a multiple k of a particular frequency, for k ≥ 1. The step 1720 may be performed by, for example, first rectifier 332 or 432.

Then, at step 1730, the method may include rectifying the electric signal to harvest energy in at least one second frequency band and generate at least one second rectified signal, the at least one second frequency band including a respective at least one second frequency substantially equal to a multiple k' of the particular frequency, for k' ≥ 2. The step 1730 may be performed by, for example, second rectifier 334, 434 and/or 436.

Further, at step 1740, the method may include combining the first rectified signal and the at least one second rectified signal into an output signal. The step 1740 may be performed by, for example, DC combiner 338 or 438.

Finally, at step 1750, the method may include providing the output signal. The step 1750 may also be performed by, for example, DC combiner 338 or 438. The output signal may be, for example, output signal 340, 440, 550 or 660. In addition, the antenna is capable of receiving signals in the first frequency band and in the at least one second frequency band.

In one embodiment of the method, the output signal may be used to provide power to a device, the device being one of a passive and a semi-passive device, e.g., RFID tag device 200, 150, a passive or semi-passive remote control, RFID reader device 110, etc.

In one embodiment, the method may be performed by a device, the device being one of a passive and a semi-passive device e.g., RFID tag device 200, 150, a passive or semi-passive remote control, RFID reader device 110, etc.

In one embodiment of the method, the output signal may be used to power up components of an RFID device operating (e.g., RFID device 200, 150, 110) in at least one of the first frequency band and the at least one second frequency band.

In one embodiment, the method may be performed by an RFID device (e.g., RFID device 200, 150, 110) operating in at least one of the first frequency band and the at least one second frequency band.

In one embodiment of the method, the combining may be performed by an RFID IC (e.g., RFID tag IC 1520 or 1620). The RFID IC may be an RFID tag IC or reader IC.

In one embodiment of the method, the rectifying in one of the first frequency band and the at least one second frequency band may be performed by an RFID) IC (e.g., RFID tag IC 1520 or 1620).

In one embodiment, the method may be performed by an RFID IC (e.g., RFID tag IC 1520 or 1620).

In one embodiment of the method, the output signal may be used to provide power to an RFID IC (e.g., RFID tag IC 1520 or 1620).

In one embodiment of the method, the RFID IC (e.g., RFID tag IC 1520 or 1620) may be compliant with the Electronic Product Code Generation 2 (EPC Gen2) standard.

In one embodiment, the method may further include combining rectified signals not rectified by the RFID IC (e.g., 1520 or 1620) and coupling to the RFID IC. The combining may be performed by DC combiners 1680, 338, 438, 500 or 600.

In one embodiment, the method may further include magnetically coupling 1760 to the converter prior to rectifying. The magnetically coupling may be performed by, for example, coupling loop 955, 1055, 1155, 1265, 1355, 1455, etc. The step of magnetically coupling is optional and may be removed.

In one embodiment of the method, the particular frequency may be a fundamental frequency of resonance for a converter that performs the converting (e.g., antenna 310, 410, 210 or 170).

In one embodiment of the method, the converter may be a dipole antenna and the rectifying is performed by rectifiers placed in positions in the vicinity of the dipole antenna and along a direction of a length of the dipole antenna, each position according to the frequency band of each respective rectifier. The antenna may be a half-wave dipole antenna. In one embodiment, a rectifier rectifying at a frequency band including a frequency that is approximately or substantially equal to a multiple k of the particular frequency may be placed at a position or distance substantially equal to (2*n+1)*L/(2*k) from an end of the dipole antenna, for n ∈ [0...k-1] and a dipole of length L. In one embodiment, substantially equal means within ±10% of the actual distance (2*n+1)*L/(2*k). In one embodiment, substantially equal means within ±20% of the actual distance (2*n+1)*L/(2*k).

In one embodiment of the method, the frequency bands may be in the ultra-high frequency (UHF) band.

As noted before, the functions of the various elements shown in the figures may be provided through the use of dedicated hardware as well as hardware capable of executing software in association with appropriate software. Also, when provided by a processor, the functions may be provided by a single dedicated processor, by a single shared processor, or by a plurality of individual processors, some of which may be shared.

It is to be further understood that, because some of the constituent system components and methods depicted in the accompanying drawings are preferably implemented in software, the actual connections between the system components or the process function blocks may differ depending upon the manner in which the present disclosure is programmed. Given the teachings herein, one of ordinary skill in the pertinent art will be able to contemplate these and similar implementations or configurations of the present disclosure.

Although the illustrative embodiments have been described herein with reference to the accompanying drawings, it is to be understood that the present disclosure is not limited to those precise embodiments, and that various changes and modifications may be effected therein by one of ordinary skill in the pertinent art without departing from the scope of the present disclosure. In addition, individual embodiments can be combined, without departing from the scope of the present disclosure. All such changes and modifications are intended to be included within the scope of the present disclosure as set forth in the appended claims.

## Claims

1. An apparatus (300, 400) for harvesting energy comprising:
an antenna (310, 410);
a first rectifier (332, 432) coupled to the antenna that harvests energy in a first frequency band to generate a first rectified signal, the first frequency band including a first frequency substantially equal to a multiple k of a particular frequency, for k ≥ 1;
at least one second rectifier (334, 434, 436) coupled to the antenna that harvests energy in at least one second frequency band to generate at least one second rectified signal, said at least one second frequency band including a respective at least one second frequency substantially equal to a multiple k' of said particular frequency, for k' ≥ 2; and
a combiner (338, 438, 500, 600) that combines said first rectified signal and said at least one second rectified signal to provide an output signal (340, 440).

2. The apparatus according to claim 1 wherein said output signal (340, 440) is used to provide power to a device, said device being one of a passive and a semi-passive device (200, 150).

3. The apparatus according to claim 1 wherein said apparatus is included into a device, said device being one of a passive and a semi-passive device (200, 150).

4. The apparatus according to claims 2 or 3 wherein said device is a Radio Frequency Identification (RFID) device (200, 150, 110) operating in at least one of said first frequency band and said at least one second frequency band.

5. The apparatus according to any of the previous claims wherein at least one of said rectifier (332, 334, 432, 434, 436) is magnetically coupled (955, 965, 975) to said antenna.

6. The apparatus according to any of the previous claims wherein said particular frequency is a fundamental frequency of resonance for said antenna.

7. The apparatus according to any of the previous claims wherein said antenna is a dipole antenna (700, 800) and said rectifiers (950, 960, 970) are placed in positions in the vicinity of said dipole antenna and along a direction of a length of said dipole antenna (910), each position according to the frequency band of each respective rectifier.

8. The apparatus according to any of the previous claims wherein said frequency bands are in the ultra-high frequency (UHF) band.

9. A method (1700) of harvesting energy comprising:
converting (1710) an electromagnetic field into an electric signal;
rectifying (1720) said electric signal to harvest energy in a first frequency band and generate a first rectified signal, the first frequency band including a first frequency substantially equal to a multiple k of a particular frequency, for k ≥ 1;
rectifying (1730) said electric signal to harvest energy in at least one second frequency band and generate at least one second rectified signal, said at least one second frequency band including a respective at least one second frequency substantially equal to a multiple k' of said particular frequency, for k' ≥ 2;
combining (1740) said first rectified signal and said at least one second rectified signal into an output signal; and
providing (1750) said output signal.

10. The method according to claim 9 wherein said output signal is used to provide power to a device, said device being one of a passive and a semi-passive device.

11. The method according to claims 9 wherein said method is performed by a device, said device being one of a passive and a semi-passive device.

12. The method according to claim 10 or 11 wherein said device is a Radio Frequency Identification (RFID) device operating in at least one of said first frequency band and said at least one second frequency band.

13. The method according to any of the previous claims further comprising:
magnetically coupling (1760) to said converter prior to rectifying.

14. The method according to any of the previous claims wherein said particular frequency is a fundamental frequency of resonance for a converter that performs said converting.

15. The method according to any of the previous claims wherein said converter is a dipole antenna and said rectifying (1720, 1730) is performed by rectifiers placed in positions in the vicinity of said dipole antenna and along a direction of a length of said dipole antenna, each position according to the frequency band of each respective rectifier.
